# FASCICULE DE BREVET EUROPEEN

(11) **EP 0 990 188 B1**
(45) Date de publication et mention de la délivrance du brevet: **28.08.2002**
(21) Numéro de dépôt: 98932242.5
(22) Date de dépôt: 19.06.1998
(51) Int. Cl.: G02B 27/01

(54) **DISPOSITIF DE VISUALISATION POUR VISUEL DE CASQUE**
BILDDARSTELLUNGSVORRICHTUNG FÜR HELMANZEIGE
DISPLAY DEVICE FOR HELMET-MOUNTED DISPLAY

(30) Priorité: 20.06.1997 FR 9707711
(43) Date de publication de la demande: 05.04.2000
(73) Titulaire: THALES AVIONICS S.A., 78141 Vélizy Villacoublay Cédex (FR)
(72) Inventeur: POTIN, Laurent-Thomson-CSF Propriété Intellectuell, F-94117 Arcueil Cedex (FR)
(74) Mandataire: Albert, Claude
(86) Numéro de dépôt international: FR9801294
(87) Numéro de publication internationale: WO98059272

(56) Documents cités:
- EP-A- 0 077 193
- EP-A- 0 366 467
- EP-A- 0 687 932
- EP-A- 0 722 106
- GB-A- 2 261 804
- JP-A- 8 313 829
- US-A- 5 701 202

## Description

La présente invention a pour objet un dispositif permettant la réalisation de visuels de casque ergonomiques de masse allégée, dans lesquels une image lumineuse est observée en superposition avec la vision du paysage extérieur.

Ce type de visuels de casque est utilisé dans le domaine aéronautique, l'observateur étant le pilote d'un avion ou d'un hélicoptère.

En particulier, les avions d'armes ou les hélicoptères de combat nécessitent la présentation d'informations de pilotage, de conduite de tir mais également de prises de vue intensifiées concernant l'environnement de l'avion ou de l'hélicoptère. Toutes ces informations peuvent être présentées sur un viseur tête haute, présent dans tous les avions d'armes et certains hélicoptères.

L'inconvénient de ce type de visualisation est qu'elle ne peut présenter une image que dans un champ limité et toujours centré dans l'axe de l'avion alors que le pilote peut avoir à effectuer des visées éloignées de l'axe de l'avion. C'est pourquoi à l'heure actuelle, des dispositifs de visualisation sont intégrés au niveau du casque du pilote, le pilote entraînant le champ de visualisation avec lui. De tels dispositifs intégrés permettent au pilote de conserver avec lui des systèmes autonomes, notamment de prise de vue intensifiée. Ils peuvent comprendre notamment un objectif de prise de vue, couplé à un intensificateur de lumière, une optique relais, de façon à projeter sur la visière du casque, une image renvoyée en superposition d'une scène ambiante en direction de l'oeil du pilote.

Malgré ces avantages, la présentation d'image sur visière souffre des défauts inhérents à l'usage en projection sur une visière inclinée.

Les défauts sont notamment de deux types : le premier type concerne la distorsion d'image. En effet, du fait des fortes variations d'incidence sur la visière, dues à son inclinaison en fonction du champ observé, l'image projetée sur une visière est distordue (souvent appelée distorsion d'excentrement de seconde espèce).

Le second type concerne l'astigmatisme introduit au niveau de l'image. L'inclinaison de la visière a pour un champ donné, une influence sur la qualité de l'image au sein d'un même champ : le rayon de courbure vu suivant un plan donné, diffère de celui observé suivant un plan orthogonal au premier. Les rayons, au regard de ces deux plans, se focalisent donc à des endroits différents.

Pour compenser ces défauts optiques, certaines solutions ont déjà été envisagées. Notamment il est possible d'utiliser une visière de forme torique pour compenser la distorsion et l'astigmatisme.

Cependant, la conception de visière de forme torique reste difficile de mise en oeuvre.

Une autre solution consiste à introduire après l'objectif de prise de vue, un dispositif de correction d'aberration optique utilisant un circuit CCD puis un tube à rayons cathodiques pour recréer une image corrigée. Un tel dispositif augmente le poids d'un casque de pilote et nécessite généralement une alimentation en tension élevée, incompatible avec un système autonome capable d'être embarqué avec le pilote lors de l'éjection de ce dernier.

D1 = EP-A-077 193 divulge un visuel de casque comportant un prisme conçu pour compenser la distorsion et l'astigmatisme.

Pour pallier ces différents inconvénients, l'invention propose un dispositif de visualisation pour visuel de casque utilisant au moins un prisme optique comprenant sur l'une de ses faces un traitement sélectif en angle d'incidence et présentant des aberrations optiques capables de compenser les aberrations type distorsion et astigmatisme créées par la visière au niveau des images.

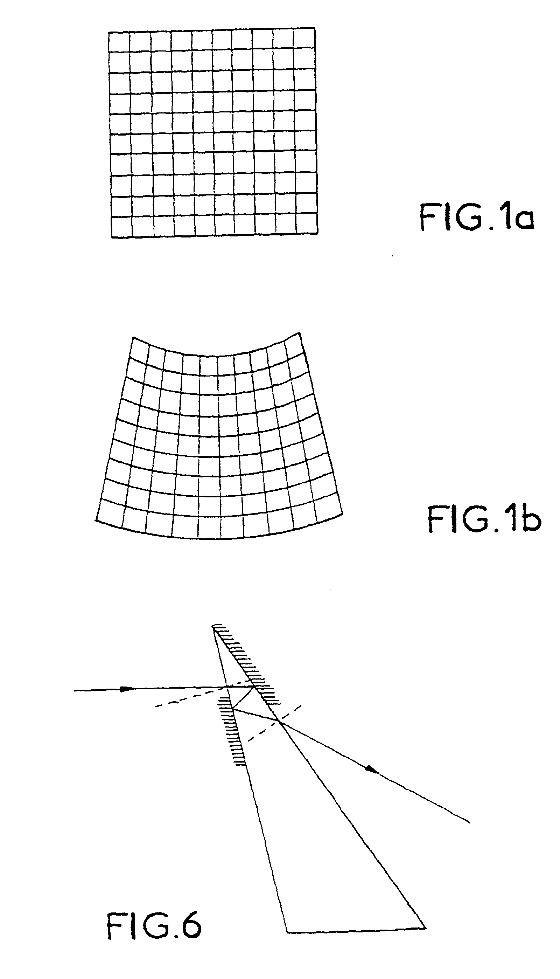

En effet, dans un prisme, à la réfraction lors du passage entre l'air et le milieu du prisme, la non linéarité des variations d'angles incidents et réfractés, induit une déformation d'image du même type que celle illustrée en figure 1. La figure 1a est relative a une matrice de points image non déformée. La figure 1b est relative a une matrice de points image déformée par la visière. De plus le prisme optique présente une invariance par translation suivant un plan particulier. Ses propriétés de réfraction diffèrent donc au sein d'un même champ entre ce plan et le plan qui lui est orthogonal, phénomène analogue à l'astigmatisme.

Plus précisément l'invention a pour objet un dispositif de visualisation pour visuel de casque selon la revendication 1.

L'invention sera mieux comprise et d'autres avantages apparaîtront à la lecture de la description qui va suivre donnée à titre non limitatif et grâce aux figures annexées parmi lesquelles :
- les figures 1a et 1b illustrent les distorsions d'images créées par la courbure d'une visière de casque ;
- la figure 2 illustre un exemple de combineur utilisé dans un dispositif de visualisation selon l'invention ;
- la figure 3 illustre un premier exemple de dispositif de visualisation pour visuel de casque selon l'invention comprenant un prisme fonctionnant en transmission ;
- la figure 4 illustre un second exemple de dispositif de visualisation pour visuel de casque selon l'invention comprenant un prisme fonctionnant en réflexion ;
- la figure 5 illustre un troisième exemple de dispositif de visualisation pour visuel de casque selon l'invention, comprenant un générateur d'image ;
- la figure 6 illustre un exemple de prisme utilisé dans l'invention ;
- la figure 7 illustre un exemple de casque utilisant un dispositif selon l'invention.

Selon un premier mode de l'invention, le dispositif de visualisation comprend un seul prisme, fonctionnant en transmission, les moyens de superposition d'images et de scène extérieure étant intégrés à la visière.

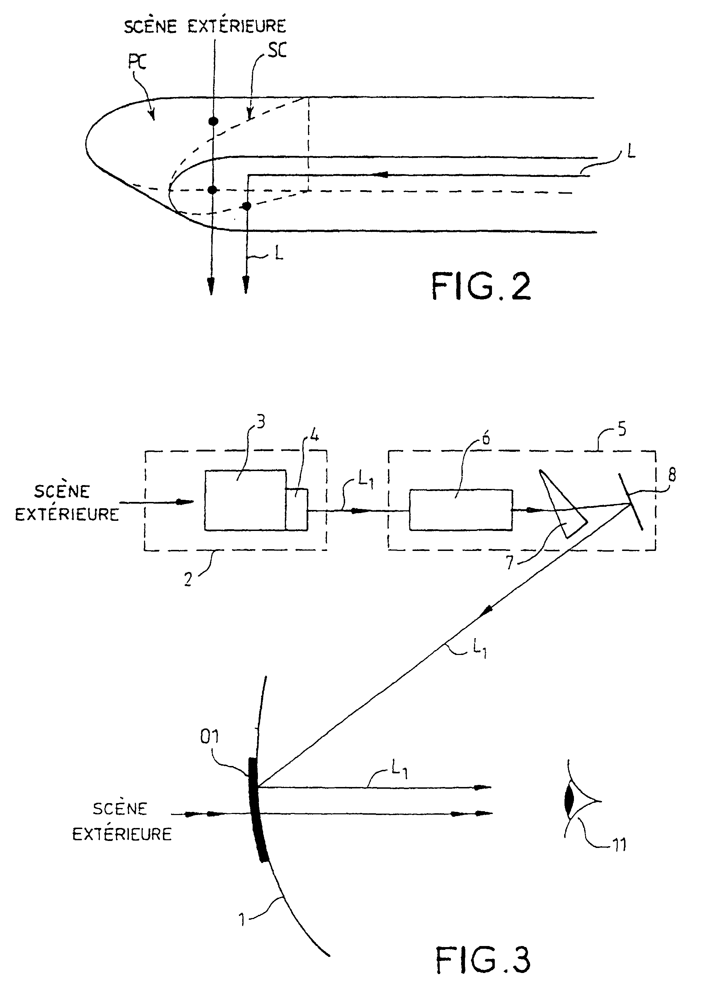

Comme l'illustre la figure 3, le visuel de casque comprend une visière 1 qui a subi localement un traitement de surface 01 de type diélectrique ou holographique, pour réfléchir un faisceau lumineux porteur d'images intensifiées L1, tout en permettant la transmission d'une scène extérieure. Le faisceau lumineux L1 est créé à partir d'un dispositif 2 comprenant, selon un autre mode de l'invention, un objectif de prise de vue 3 et un intensificateur de lumière 4. L'intensificateur de lumière comprend une photocathode en entrée et un écran cathodique en sortie. Les photons reçus sur l'objectif de prise de vue sont transformés en électrons par la photocathode. L'intensificateur de lumière accélère et multiplie ces électrons pour finalement former une image intensifiée sur son écran cathodique. Cette image intensifiée est envoyée dans une optique relais 5 constituée notamment d'un certain nombre de lentilles 6 et de moyens de renvoi 8 pour diriger l'image intensifiée en direction de la visière. L'optique relais comprend également le prisme optique 7. L'oeil du pilote 11 observe ainsi le faisceau d'images intensifiées L1 et la scène extérieure.

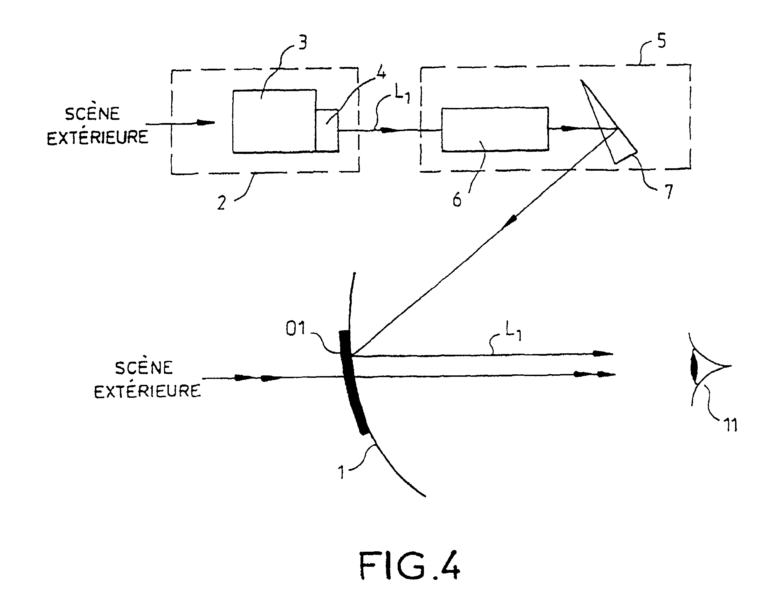

Selon un autre mode de réalisation de l'invention, le dispositif de visualisation comprend un prisme fonctionnant en réflexion. Une des contraintes majeures des visuels de casque demeure la lourdeur des dispositifs actuels. Tout gain de masse réalisé au niveau de chacun des éléments du visuel de casque est important. C'est pourquoi, il peut être particulièrement intéressant, suivant un autre mode de réalisation de l'invention, de doubler le passage d'un faisceau lumineux dans le milieu correcteur d'aberrations optiques, en l'occurrence le prisme optique. Ce double passage permet de diminuer d'un facteur 2 le poids du prisme optique utilisé, ce qui représente un atout important dans le cas de prismes en verre de fort indice optique mais également de grande densité. Le dispositif de visualisation de ce mode illustré en figure 4, est très similaire au dispositif illustré en figure 3. Dans ce mode, les moyens de renvoi sont intégrés au prisme optique qui fonctionne en réflexion.

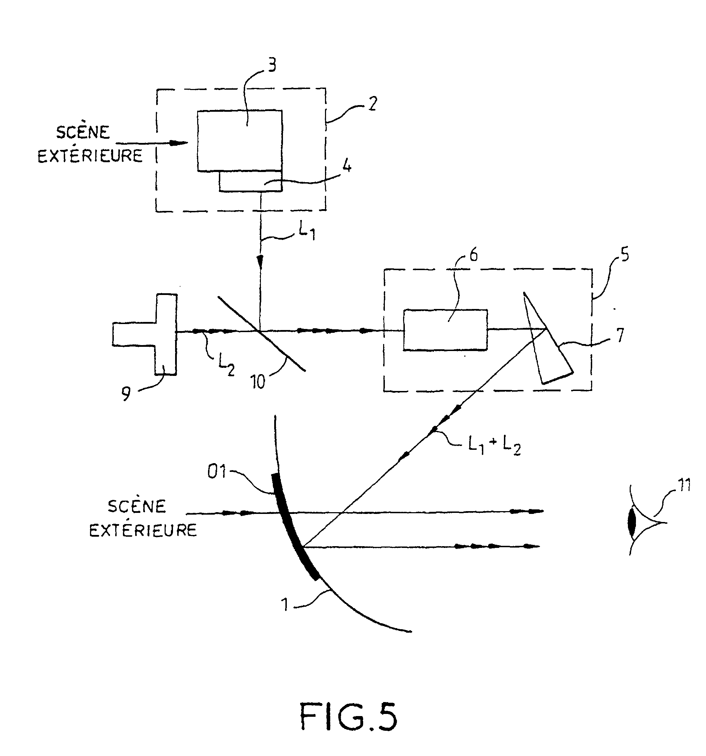

Selon un autre mode de réalisation de l'invention, le visuel de casque comprend en plus un générateur d'image permettant de superposer des informations sur les images perçues par le pilote. Cette variante de l'invention est illustrée en figure 5.

En plus du dispositif de prise de vue 2, le visuel de casque comprend un générateur d'images 9 pouvant être par exemple un générateur de symboles générant un faisceau lumineux L2. II comprend également une optique de mélange 10 recevant d'une part les images intensifiées portées par le faisceau de lumière L1 et d'autre part les images créées par le générateur d'images et portées par le faisceau de lumière L2.

Selon d'autres variantes de l'invention, les faisceaux optiques L1 et L2 peuvent effectuer plus d'un aller et retour dans le prisme optique. Cela peut être notamment recherché dans le cas de prisme optique en plastique, intéressant au niveau poids, par rapport au verre mais d'indice de réfraction (voisin de 1,5) plus faible que celui des verres employés (voisin de 1,8) donc introduisant moins de corrections optiques.

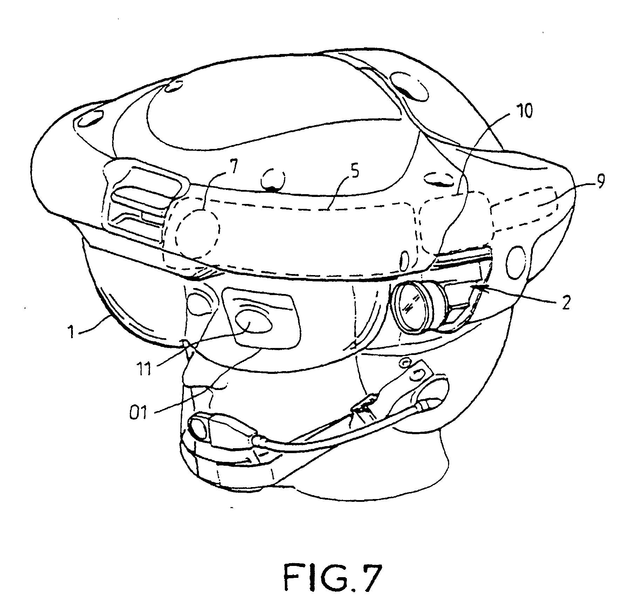

Pour cela, le prisme optique peut avoir un traitement réfléchissant sur une partie seulement de l'une de ses faces et également au moins sur une partie d'une autre de ses faces comme illustrée en figure 6.

Le prisme optique utilisé dans l'invention peut également comprendre sur l'une de ses faces un traitement sélectif en angle d'incidence.

La figure 7 illustre un autre mode de réalisation de l'invention qui est un casque équipé du dispositif de visualisation précédemment décrit à la figure 5. Le casque représente une version binoculaire permettant de projeter des informations au niveau des deux yeux du pilote.

Le casque du pilote comprend deux premiers logements latéraux pour des dispositifs de prise de vue 2, deux seconds logements latéraux pour les générateurs d'images 9 pouvant être situés au-dessus desdits premiers logements latéraux ainsi que deux mélangeurs 10. Le casque comprend également un jeu de deux optiques relais 5 et deux prismes 7, en sortie desquelles les images générées et les prises de vues intensifiées peuvent être superposées à la scène extérieure, devant les yeux du pilote 11.

Sur la figure 7, seul le dispositif de visualisation gauche intégré au casque est représenté, le même dispositif non représenté est intégré dans la partie droite du casque.

Selon un autre mode de l'invention, les moyens pour superposer une scène extèrieure et les prises de vue intensifiées comprennent un combineur en verre indépendant.

En effet, l'invention s'applique également dans le cas d'un combineur non intégré à la visière qui peut présenter une surface courbe de renvoi comme l'illustre la figure 2, cette surface de renvoi créant le même type de distorsion qu'une visière. Ce type de combineur comprend une surface de renvoi courbe Sc de centre de courbure C, couplée à un prisme complémentaire PC pour diriger le faisceau optique d'images intensifiées ou synthétiques L en direction de l'oeil du pilote 11.

Pour augmenter les performances du dispositif sans l'alourdir, le prisme optique peut comprendre des moyens pour faire parcourir aux faisceaux optiques au moins un aller et un retour dans ledit prismeoptique.

Le prisme optique utilisé dans le dispositif selon l'invention peut avantageusement comprendre, selon un autre mode de réalisation, une face courbe de manière à se rapprocher de l'effet visière pour mieux compenser les aberrations optiques introduites par la visière.

## Revendications

1. Dispositif de visualisation pour visuel de casque comportant :
- un dispositif de prise de vue intensifiée capable de délivrer un faisceau lumineux (L1) ;
- une visière (1) ;
- des moyens (01, 02) pour superposer devant un observateur, une scène extérieure et le faisceau lumineux (L1) délivré par le dispositif de prise de vue intensifiée (2), via une optique relais (5) ;
l'optique relais comprenant au moins un prisme optique (7) pour compenser la distorsion et l'astigmatisme introduits par la visière sur le faisceau lumineux (L1), **caractérisé en ce que** ledit prisme comprend sur l'une de ses faces un traitement sélectif en angle d'incidence.

2. Dispositif de visualisation pour visuel de casque selon la revendication 1, **caractérisé en ce qu'**il comprend un générateur d'images (9) émettant un faisceau lumineux porteur d'informations (L2) et un mélangeur (10) de manière à superposer les faisceaux lumineux (L1) et (L2) au niveau de l'optique relais.

3. Dispositif de visualisation pour visuel de casque selon l'une des revendications 1 ou 2, **caractérisé en ce que** le dispositif de prise de vue intensifiée comprend un objectif de prise de vue (3) et un intensificateur de lumière (4).

4. Dispositif de visualisation pour visuel de casque selon l'une des revendications 1 à 3, **caractérisé en ce que** la visière comprend un traitement semi-réfléchissant pour superposer devant un observateur, une scène extérieure et le faisceau lumineux (L1) ou les faisceaux lumineux (L1) et (L2).

5. Dispositif de visualisation pour visuel de casque selon l'une des revendications 1 à 3, **caractérisé en ce que** la visière comprend un traitement holographique pour superposer devant un observateur, une scène extérieure et le faisceau lumineux (L1) ou les faisceaux lumineux (L1) et (L2).

6. Dispositif de visualisation pour visuel de casque selon l'une des revendications 1 à 3, **caractérisé en ce qu'**il comprend un combineur en verre pour superposer devant un observateur une scène extérieure et le faisceau lumineux (L1) ou les faisceaux lumineux (L1) et (L2).

7. Dispositif de visualisation pour visuel de casque selon l'une des revendications 1 à 6, **caractérisé en ce que** le prisme optique comprend des moyens pour faire parcourir au faisceau (L1) ou aux faisceaux (L1) et (L2) au moins un aller et retour dans ledit prisme optique.

8. Dispositif de visualisation pour visuel de casque selon la revendication 6, **caractérisé en ce que** le prisme optique comprend deux faces au moins partiellement réfléchissantes pour le faisceau (L1) ou pour les faisceaux (L1) et (L2).

9. Dispositif de visualisation pour visuel de casque selon l'une des revendications 1 à 8, **caractérisé en ce que** le prisme optique comprend une face courbe pour augmenter la compensation de la distorsion et de l'astigmatisme introduits par la visière sur le faisceau (L1) ou les faisceaux (Li) et (L2).

10. Casque de pilote comprenant une visière (1), deux premiers logements latéraux pour des dispositifs de prise de vue intensifiée (2) délivrant un faisceau lumineux (L1), deux seconds logements latéraux pour des générateurs d'images (9) émettant un faisceau lumineux porteur d'informations (L2) et deux mélangeurs (10) de manière à superposer les faisceaux lumineux (L1) et (L2) devant les yeux du pilote, via deux optiques relais comprenant au moins deux prisures (7) pour compenser la distorsion et l'astigmatisme introduits par la visière, lesdits prismes comprenant sur l'une de leurs faces un traitement sélectif en angle d'incidence.

## Claims

1. Display device for a helmet-mounted visual display system comprising:
- an image intensifier capable of delivering a light beam (L1) ;
- a visor (1) ;
- means (01, 02) for superimposing, in front of an observer, an external scene and the light beam (L1) delivered by the image intensifier (2), via a relay optic (5) ;
the relay optic comprising at least one optical prism (7) to compensate for the distortion and the astigmatism introduced by the visor into the light beam (L1), **characterized in that** the said prism comprises on one of its faces a coating which is selective in terms of angle of incidence.

2. Display device for a helmet-mounted visual display system according to Claim 1, **characterized in that** it comprises an image generator (9) emitting an information-carrying light beam (L2) and a mixer (10) so as to superimpose the light beams (L1) and (L2) at the relay optic.

3. Display device for a helmet-mounted visual display system according to either of Claims 1 and 2, **characterized in that** the image intensifier comprises an imaging-lens (3) and a light intensifier (4).

4. Display device for a helmet-mounted visual display system according to one of Claims 1 to 3, **characterized in that** the visor comprises a semireflective coating for superimposing, in front of an observer, an external scene and the light beam (L1) or the light beams (L1) and (L2).

5. Display device for a helmet-mounted visual display system according to one of Claims 1 to 3, **characterized in that** the visor comprises a holographic coating for superimposing, in front of an observer, an external scene and the light beam (L1) or the light beams (L1) and (L2).

6. Display device for a helmet-mounted visual display system according to one of Claims 1 to 3, **characterized in that** it comprises a combiner made of glass for superimposing, in front of an observer, an external scene and the light beam (L1) or the light beams (L1) and (L2).

7. Display device for a helmet-mounted visual display system according to one of Claims 1 to 6, **characterized in that** the optical prism comprises means to make the beam (L1) or the beams (L1) and (L2) perform at least one return journey in the said optical prism.

8. Display device for a helmet-mounted visual display system according to Claim 6, **characterized in that** the optical prism comprises two faces that are at least partially reflective for the beam (L1) or for the beams (L1) and (L2).

9. Display device for a helmet-mounted visual display system according to one of Claims 1 to 8, **characterized in that** the optical prism comprises a curved face to increase the compensation for the distortion and the astigmatism introduced by the visor into the beam (L1) or the beams (L1) and (L2).

10. Pilot's helmet comprising a visor (1), two first lateral housings for image intensifiers (2) delivering a light beam (L1), two second lateral housings for image generators (9) emitting an information-carrying light beam (L2) and two mixers (10) so as to superimpose the light beams (L1) and (L2) in front of the pilot's eyes, via two relay optics comprising at least two prisms (7) to compensate for the distortion and the astigmatism introduced by the visor, the said prisms comprising, on one of their faces, a coating which is selective in terms of angle of incidence.

## Patentansprüche

1. Anzeigevorrichtung für Helmanzeige, mit:
- einer Bildverstärkervorrichtung, die ein Lichtstrahlenbündel (L1) liefern kann;
- einer Sonnenblende (1);
- Mitteln (01, 02), die eine äußere Szene und das von der Bildverstärkervorrichtung (2) über eine Relaisoptik (5) gelieferte Lichtstrahlenbündel (L1) vor einem Beobachter überlagern;
wobei die Relaisoptik wenigstens ein optisches Prisma (7) umfaßt, das die Verzerrung und den Astigmatismus kompensiert, die durch die Sonnenblende in den Lichtstrahl (L1) eingeführt werden, **dadurch gekennzeichnet, daß** das Prisma auf einer seiner Flächen in bezug auf den Einfallswinkel selektiv bearbeitet ist.

2. Anzeigevorrichtung für Helmanzeige nach Anspruch 1, **dadurch gekennzeichnet, daß** sie einen Bildgenerator (9), der ein Informationen tragendes Lichtstrahlenbündel (L2) aussendet, und einen Mischer (10), der die Lichtstrahlenbündel (L1) und (L2) auf Höhe der Relaisoptik überlagert, umfaßt.

3. Anzeigevorrichtung für Helmanzeige nach einem der Ansprüche 1 oder 2, **dadurch gekennzeichnet, daß** die Bildverstärkervorrichtung ein Bildaufnahmeobjektiv (3) und einen Lichtverstärker (4) umfaßt.

4. Anzeigevorrichtung für Helmanzeige nach einem der Ansprüche 1 bis 3, **dadurch gekennzeichnet, daß** die Sonnenblende halbreflektierend bearbeitet ist, um eine äußere Szene und das Lichtstrahlenbündel (L1) oder die Lichtstrahlenbündel (L1) und (L2) vor einem Beobachter zu überlagern.

5. Anzeigevorrichtung für Helmanzeige nach einem der Ansprüche 1 bis 3, **dadurch gekennzeichnet, daß** die Sonnenblende holographisch behandelt ist, um eine äußere Szene und das Lichtstrahlenbündel (L1) oder die Lichtstrahlenbündel (L1) und (L2) vor einem Beobachter zu überlagern.

6. Anzeigevorrichtung für Helmanzeige nach einem der Ansprüche 1 bis 3, **dadurch gekennzeichnet, daß** sie einen Kombinierer aus Glas umfaßt, der eine äußere Szene und das Lichtstrahlenbündel (L1) oder die Lichtstrahlenbündel (L1) und (L2) vor einem Beobachter überlagert.

7. Anzeigevorrichtung für Helmanzeige nach einem der Ansprüche 1 bis 6, **dadurch gekennzeichnet, daß** das optische Prisma Mittel umfaßt, damit das Strahlenbündel (L1) oder die Strahlenbündel (L1) und (L2) das optische Prisma wenigstens hin und zurück durchlaufen.

8. Anzeigevorrichtung für Helmanzeige nach Anspruch 6, **dadurch gekennzeichnet, daß** das optische Prisma zwei Flächen umfaßt, die für das Lichtstrahlenbündel (L1) oder für die Lichtstrahlenbündel (L1) und (L2) wenigstens teilweise reflektierend sind.

9. Anzeigevorrichtung für Helmanzeige nach einem der Ansprüche 1 bis 8, **dadurch gekennzeichnet, daß** das optische Prisma eine gekrümmte Fläche umfaßt, die die Kompensation der Verzerrung und des Astigmatismus, die durch die Sonnenblende in das Strahlenbündel (L1) oder in die Strahlenbündel (L1) und (L2) eingeführt werden, erhöht.

10. Pilotenhelm, der eine Sonnenblende (1), zwei erste seitliche Aufnahmesitze für Bildverstärkervorrichtungen (2), die ein Lichtstrahlenbündel (L1) liefern, zwei zweite seitliche Aufnahmesitze für Bildgeneratoren (9), die ein Informationen tragendes Lichtstrahlenbündel (L2) aussenden, und zwei Mischer (10), die die Lichtstrahlenbündel (L1) und (L2) vor den Augen des Piloten über zwei Relaisoptiken überlagern, umfaßt, wobei die Relaisoptiken wenigstens zwei Prismen (7) umfassen, um die Verzerrung und den Astigmatismus, die durch die Sonnenblende eingeführt werden, zu kompensieren, wobei die Prismen auf einer ihrer Flächen in bezug auf den Einfallswinkel selektiv behandelt sind.
